# EUROPÄISCHE PATENTSCHRIFT

(11) **EP 0 628 788 B1**
(45) Veröffentlichungstag und Bekanntmachung des Hinweises auf die Patenterteilung: **29.04.1998**
(21) Anmeldenummer: 94108510.2
(22) Anmeldetag: 03.06.1994
(51) Int. Cl.: G01B 17/00

(54) **Vorrichtung zum Vermessen von langgestreckten Kunststoffprofilen, insbesondere Rohren**
Device for measuring longitudinal profiles of plastic material, in particular tubes
Dispositif pour mesurer des profilés longitudinaux en matière plastique, en particulier des tubes

(30) Priorität: 03.06.1993 DE 4318423
(43) Veröffentlichungstag der Anmeldung: 14.12.1994
(73) Patentinhaber: FRIEDRICH THEYSOHN GmbH, D-32547 Bad Oeynhausen (DE)
(72) Erfinder: Schäfer, Wolfgang, D-32584 Löhne (DE); Schneider, Uwe, D-32457 Porta Westfalica (DE)
(74) Vertreter: Cohausz & Florack

(56) Entgegenhaltungen:
- GB-A- 2 080 532
- US-A- 4 740 146

## Beschreibung

Die Erfindung betrifft eine Vorrichtung zum Vermessen von langgestreckten Kunststoffprofilen, insbesondere Rohren, mit einer mit Flüssigkeit gefüllten und unter Unterdruck stehenden Meßkammer, die einen gegenüber dem Kunststoffprofil abgedichteten Ein- und Ausgang hat und mit mindestens einem Ultraschallsensor ausgestattet ist, dessen Meßkopf bei freiliegender Sender- und Empfängerseite in einem Einsatzkörper sitzt, welcher lösbar in eine Aufnahme der Gehäusewand der Meßkammer eingesetzt ist.

Vorrichtungen zum Vermessen von langgestreckten Kunststoffprofilen sind in verschiedenen Ausführungen bekannt (DE 42 05 335 A1; DE 42 05 955 A1; DE 42 21 920 A1; DE 40 33 443 A1; EP 0 385 285 A1; DE 38 32 223 A1). Sie dienen insbesondere zur Wanddickenmessung von Rohren. Dafür sind entweder mehrere Ultraschallmeßköpfe rotierend oder reversierend um das Rohr herum gelagert oder an mehreren über den Umfang des Rohres verteilt angeordneten Stellen stationär angeordnet. Als Kopplungsmedium zwischen dem zu vermessenden Rohr und dem dazu mit Abstand angeordneten Meßkopf dient in der Regel Wasser. Deshalb sind die Ultraschallmeßköpfe in der mit Wasser gefüllten und unter Unterdruck stehenden Meßkammer untergebracht, die möglichst am Anfang des Extrusionslinie angeordnet ist. Wegen ihrer Unterbringung in der mit Wasser gefüllten Meßkammer, ist es für einen Wechsel der Meßköpfe erforderlich, den Unterdruck in der Meßkammer abzubauen und/oder das Wasser abzulassen. Der Wechsel der Ultraschallmeßköpfe läßt sich deshalb nicht ohne Beeinträchtigung der von den Verhältnissen in der Meßkammer abhängigen Qualität der zu produzierenden Rohre durchführen. Ein Wechsel der Ultraschallmeßköpfe kann aus verschiedenen Gründen erforderlich werden. Ein Grund kann sein, daß der Meßkopf ausfällt oder an seiner Sender- und Empfängerseite verschmutzt ist. Ein anderer Grund kann sein, daß der Meßkopf in seiner Auslegung nicht für das gerade produzierte Rohr geeignet ist. Durch den Einsatz unterschiedlicher Materialien für das Rohr und der Produktion von Rohren sehr unterschiedlicher Wandstärke ist es erforderlich, Ultraschallmeßköpfe mit unterschiedlich, für die Materialien und die Wandstärke am besten geeigneten Meßfrequenzen einzusetzen. Ein für kleine Wandstärken geeigneter niedriger Frequenzbereich ist für große Wandstärken nicht geeignet.

Bei einer dieser bekannten Vorrichtungen der eingangs genannten Art (DE 38 32 223 A1) ist der Meßkopf mit seiner freiliegenden, exzentrisch zu ihm angeordneten Sender- und Empfängerseite koaxial in dem Einsatzkörper verdrehbar angeordnet. Im Falle eines erforderlichen Wechsels des Meßkopfes läßt dieser sich nur gemeinsam mit dem Einsatzkörper aus der Aufnahme der Gehäusewand der Meßkammer ausbauen. Damit wird über die Aufnahme der Gehäusewand die Meßkammer zur Außenatmosphäre geöffnet.

Der Erfindung liegt die Aufgabe zugrunde, eine Vorrichtung der eingangs genannten Art dahingehend zu verbessern, daß ein Wechsel der Ultraschallmeßköpfe ohne Beeinflussung der Verhältnisse in der Meßkammer möglich ist.

Diese Aufgabe wird erfindungsgemäß dadurch gelöst, daß die Aufnahme für den Einsatzkörper als in die Außenseite der Gehäusewand eingeformte Ausnehmung mit einem zum Inneren der Meßkammer weisenden Fenster ausgebildet ist, mit welchem in der Meßstellung des Einsatzkörpers die freie Sender- und Empfängerseite des Meßkopfes zur Deckung gebracht ist, so daß die ankoppelnde Flüssigkeit in der Meßkammer bis an die freiliegende Sender- und Empfängerseite gelangt, und welches nach einer Verstellung des Einsatzkörpers in eine Montageposition von dem Einsatzkörper verschlossen ist.

Da bei der Erfindung der Meßkopf nicht unmittelbar in dem Gehäuse der Meßkammer, sondern mittels des besonders gestalteten und verstellbaren Einsatzkörpers in der besonders gestalteten Aufnahme montiert ist, kann er in der Meßposition das Kunststoffprofil unter optimalen Bedingungen vermessen, während in der Montageposition die Meßkammer durch den Einsatzkörper nach außen abgeschottet ist, so daß der Meßkopf problemlos ausgebaut werden kann, ohne daß dadurch die Verhältnisse im Inneren der Meßkammer, insbesondere der Unterdruck und damit auch die Qualität des extrudierten Kunststoffprofils, beeinflußt werden. Da der Meßkopf nicht insgesamt, sondern nur mit seiner Sender- und Empfängerseite im Vakuumbereich liegt, kann der unter Vakuum und mit Wasser zu füllende Raum sehr klein gehalten werden, weshalb auch der Bauaufwand gering ist. Auch läßt sich ein solcher kleiner Raum mit Wasser für eine gute Ankopplung der Meßköpfe leicht fluten. Die Erfindung läßt sich sowohl bei einem stationären als auch einem rotierenden oder reversierenden Meßkopfsystem verwirklichen. Da im Unterschied zum Stand der Technik nicht der gesamte Meßkopf im Vakuumbereich untergebracht ist, kann der rotierende Teil klein bauen. Zum Schutz der Bedienungspersonen braucht lediglich um den rotierenden Teil ein Schutzkäfig gebaut zu werden. Der Herstellungsaufwand ist entsprechend klein.

Nach einer ersten Ausgestaltung der Erfindung ist die Aufnahme als Sackloch ausgebildet und der Einsatzkörper nach Art einer Revolvertrommel durch Verdrehen in die Meß- und Montageposition verstellbar. Nicht so optimal ist eine denkbare andere Lösung, bei der nach Art eines Kulissensteines der Einsatzkörper in Achsrichtung oder in Umfangsrichtung verschoben wird.

Nach einer weiteren Ausgestaltung der Erfindung ist die mit Wasser gefüllte Meßkammer zwischen einer Vakuumkühlkammer mit Kalibrierhülse und einer Vakuumkühlkammer angeordnet und dicht an diese Kammern angeschlossen, wobei die Meßkammer einen in eine der Kühlkammern mündenden Überlauf aufweist. Aber nicht nur an dieser Stelle, sondern auch an anderen Stellen der Extrusionslinie könnte die Meßkammer angeordnet sein, zum Beispiel im Einlaufbereich vor der Kalibrierhülse.

Im folgenden wird die Erfindung anhand einer ein Ausführungsbeispiel darstellenden Zeichnung näher erläutert. Im einzelnen zeigen:
- Figur 1: eine Extrusionslinie in schematischer Darstellung in Seitenansicht,
- Figur 2: eine Meßkammer mit Ultraschallsensor im Axialschnitt,

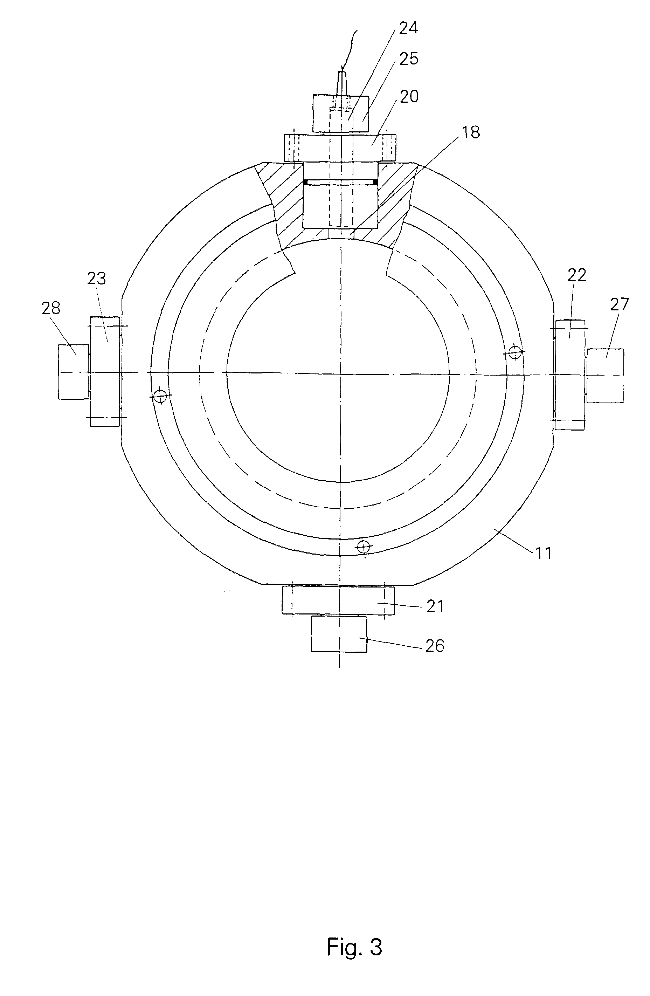

- Figur 3: die Meßkammer gemäß Figur 2 in Ansicht aus Richtung des Pfeils A
**und**

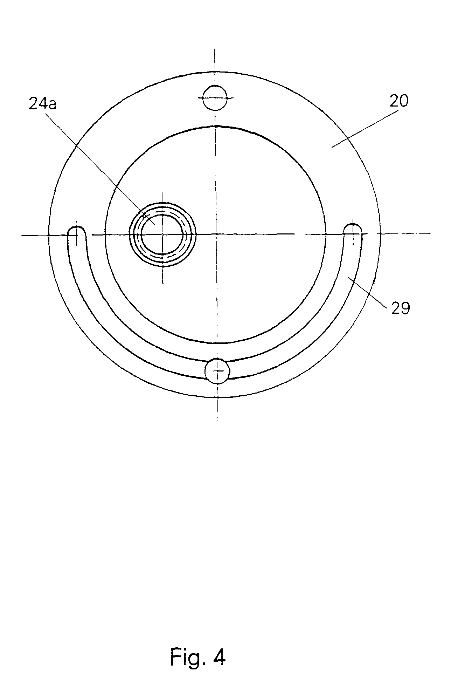

- Figur 4: einen Einsatzkörper mit Meßkopf in Ansicht aus Richtung des Pfeils B der Figur 2.

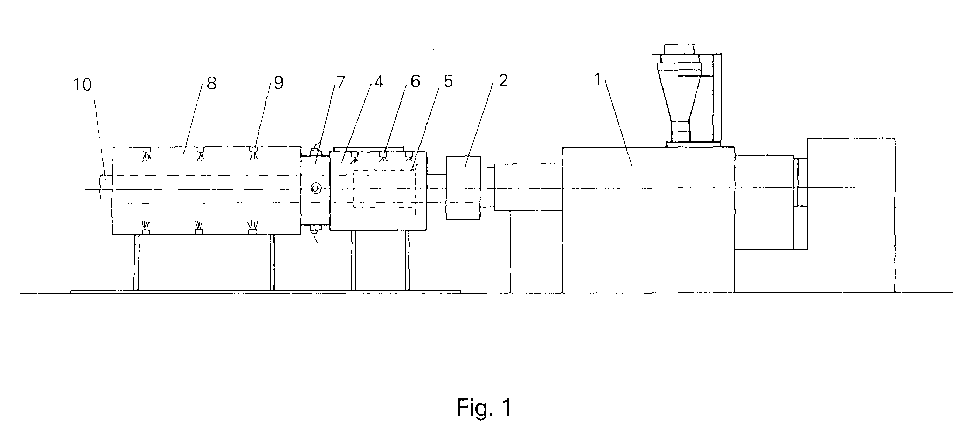

Die in Figur 1 dargestellte Extrusionslinie besteht aus einem Extruder 1 mit profilgebender Düse 2, einer unter Vakuum stehenden Kühlkammer 4 mit einer Kalibrierhülse 5 und Sprühdüsen 6, einer Meßkammer 7 und einer weiteren, unter Vakuum stehenden Kühlkammer 8 mit Sprühdüsen 9. Das zu extrudierende Rohr 10 verläßt diese letzte Kühlkammer 8 in einem formstabilen Zustand.

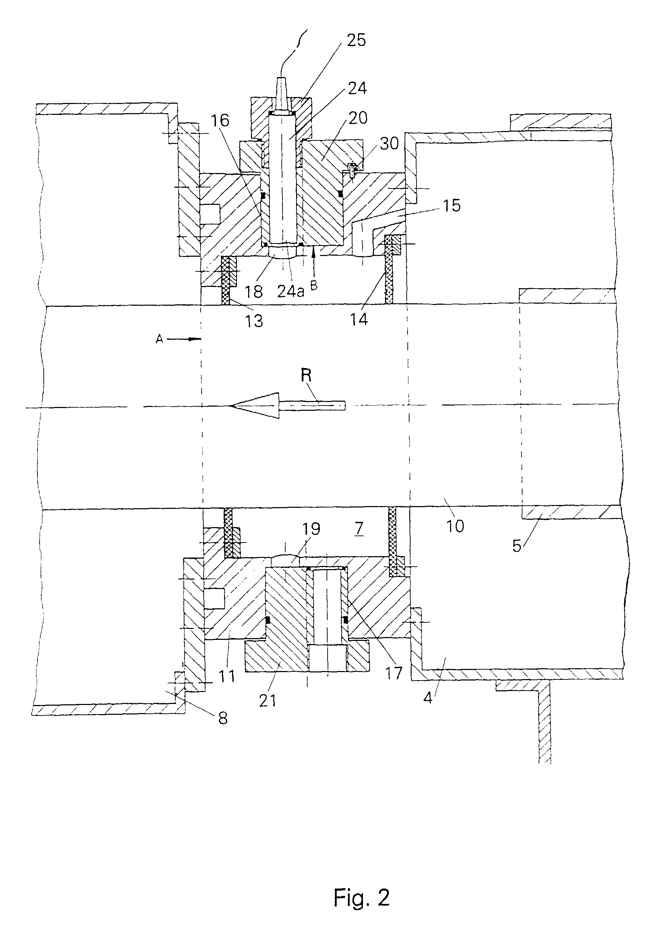

Die in Figur 2 in Einzelheiten dargestellte Meßkammer 7 ist dicht an der in Produktionsrichtung R vorgeordneten Kühlkammer 4 und der in Produktionsrichtung R nachgeordneten Kühlkammer 8 angeschlossen. Die von einem ringförmigen Gehäuse 11 gebildete Meßkammer 7 weist an ihrem Eingang und an ihrem Ausgang jeweils eine Gummidichtung 13,14 auf, die die Meßkammer 7 gegenüber einem extrudierten Rohr 10 und damit auch gegenüber der vor- und nachgeordneten Kühlkammer 4,8 abdichten. Diese Dichtungen 13,14 ermöglichen es, die Meßkammer 7 mit Wasser zu fluten. Die Flutung erfolgt über einen nicht dargestellten Zulauf. Über einen Überlauf 15 kann überschüssiges Wasser in die vorgeordnete Kühlkammer 4 abfließen.

Das Gehäuse 11 weist an seinem Umfang verteilt vier Aufnahmen 16,17 in Form von Sacklöchern auf, die im Boden ein zur Meßkammer 7 weisendes, exzentrisch angeordnetes Fenster 18,19 haben. In diesen Aufnahmen 16,17 sitzen abgedichtet Einsatzkörper 20,21,22,23. In den Einsatzkörpern 20-23 sind achsparallele Bohrungen vorgesehen, in denen Meßköpfe 24 von Ultraschallsensoren mit Kontermuttern 25,28 gehalten sind. Die Anordnung ist dabei so getroffen, daß die Einsatzkörper 20-23 in eine Meßposition und in eine Montageposition verdreht werden können. Die Verdrehung wird dabei über eine halbkreisbogenförmige Nut 29 in den Einsatzkörpern 20-23 und einem darin eingreifenden Stift 30 im Gehäuse 11 begrenzt. In der Meßposition liegt die Sender- und Empfängerseite 24a eines jeden Meßkopfes 24 im Fenster 18 (Figur 2, oben), während in der dazu um 180° verdrehten Montageposition (Figur 2, unten) das Fenster 19 durch die Stirnseite des Einsatzkörpers 21 abgedeckt ist und die Bohrung im Einsatzkörper 21 für den Ultraschallsensor durch den geschlossenen Teil des Bodens der Aufnahme 17 abgedeckt ist. In der Meßposition kann das ankoppelnde Wasser in der Meßkammer 7 über das Fenster 18 bis an die Meß- und Senderseite 24a gelangen und dadurch eine optimale Ankopplung des Meßkopfes 24 für die Messung ermöglichen, während in der Montageposition die Meßkammer 7 durch den Einsatzkörper 21 nach außen verschlossen ist und der Meßkopf 24 ohne Beeinträchtigung der Verhältnisse in der Meßkammer 7 demontiert und durch einen neuen ersetzt werden kann.

Während das soweit beschriebene Ausführungsbeispiel stationäre Meßköpfe aufweist, läßt sich die Erfindung in einer etwas abgewandelten Ausführung auch für rotierende oder reversierende Meßköpfe verwirklichen. In einem solchen Fall braucht lediglich das Gehäuse 11 drehbar gelagert zu sein. Beispielsweise könnte ein axialer Ringabschnitt mit den Aufnahme 16,17 in von den übrigen Bereichen des Gehäuses 11 gebildeten Lagerböcken gelagert sein. Es versteht sich, daß in diesem Fall die gegeneinander drehbaren Teile abgedichtet sein müssen.

## Patentansprüche

1. Vorrichtung zum Vermessen von langgestreckten Kunststoffprofilen (10), insbesondere Rohren, mit einer mit Flüssigkeit gefüllten und/oder unter Unterdruck stehenden Meßkammer (7), die einen gegenüber dem Kunststoffprofil abdichtbaren Ein- und Ausgang hat und mit mindestens einem Ultraschallsensor ausgestattet ist, dessen Meßkopf (24) eine freiliegende Sender- und Empfängerseite (24a) aufweist und in einem Einsatzkörper (20-23) sitzt, welcher lösbar in eine Aufnahme (15,17) der Gehäusewand (11) der Meßkammer (7) eingesetzt ist,
**dadurch gekennzeichnet,** daß die Aufnahme (16,18) für den Einsatzkörper (20-23) als in die Außenseite der Gehäusewand (11) eingeformte Ausnehmung mit einem zu Inneren der Meßkammer (7) weisenden Fenster (18) ausgebildet ist, mit welchem in der Meßstellung des Einsatzkörpers (20-23) die freie Sender- und Empfängerseite (24a) des Meßkopfes (24) zur Deckung gebracht ist, und welches nach einer Verstellung des Einsatzkörpers (20-23) in eine Montageposition von dem Einsatzkörper (20-23) verschlossen ist.

2. Vorrichtung nach Anspruch 1,
**dadurch gekennzeichnet,** daß die Aufnahme (16,17) als Sackloch ausgebildet ist und der Einsatzkörper (20-23) nach Art einer Revolvertrommel durch Verdrehen in die Meß- und Montageposition verstellbar ist.

3. Vorrichtung nach Anspruch 1 oder 2,
**dadurch gekennzeichnet**, daß die mit Wasser gefüllte Meßkammer (7) zwischen einer Vakuumkühlkammer (4) mit Kalibrierhülse (5) und einer Vakuumkühlkammer (8) angeordnet und dicht an diesen Kammern (4,8) angeschlossen ist, wobei die Meßkammer (7) einen in eine der Kühlkammern (4) mündenden Überlauf (15) hat.

## Claims

1. A device for the measuring of elongate plastics profiles (10), more particularly tubes having a liquid-filled measuring chamber (7) under negative pressure which has an inlet and an outlet each sealable in relation to a plastics profile and is equipped with at least one ultrasonic sensor whose measuring head (24) has an exposed transmitter and receiver side (24a) and which is disposed in an insert member (20-23) releasably inserted in a receptacle (15, 17) in the casing wall (11) of the measuring chamber (7), characterised in that the receptacle (16, 18) for the insert member (20-23) takes the shape of a recess formed in the outside of the casing wall (11) and having a window (18) which points towards the interior of the measuring chamber (7) and with which in the measuring position of the insert member (20-23) the exposed transmitter and receiver side (24a) of the measuring head (24) can be brought into registration, so that the coupling liquid in the measuring chamber (7) arrives as far as the exposed transmitter and receiver side (24a), said window being closed by the insert member (20-23) following an adjustment thereof into an assembly position.

2. A device according to Claim 1 characterised in that the receptacle (16, 17) takes the shape of a blind bore and the insert member (20-23) can be adjusted after the fashion of a revolver cartridge cylinder by rotation into the measuring and assembly position.

3. A device according to Claims 1 or 2 characterised in that the water-filled measuring chamber (7) is disposed between a vacuum cooling chamber (4) with calibration sleeve (5) and a vacuum cooling chamber (8) and is connected sealing-tight to said chambers (4, 8), the measuring chamber (7) having an overflow (15) discharging into one (4) of the cooling chambers.

## Revendications

1. Dispositif pour mesurer des profilés allongés en matière plastique (10), notamment des tubes, comportant une chambre de mesure (7) qui est remplie par un liquide et est placée en dépression et possède respectivement une entrée et une sortie, qui peuvent être fermées de façon étanche par rapport au profilé en matière plastique et est équipée d'au moins un capteur à ultrasons, dont la tête de mesure (24) comporte un côté dégagé d'émission et de réception (24a) et est logée dans un corps formant insert (20-23), qui est inséré de façon amovible dans un logement (15, 27) de la paroi (11) du boîtier de la chambre de mesure (7), caractérisé en ce que le logement (16, 18) pour le corps formant insert (20-23) est agencé sous la forme d'un évidement, qui est formé dans la face extérieure de la paroi (11) du boîtier et est pourvu d'une fenêtre (18) dirigée vers l'intérieur de la chambre de mesure (7), et avec laquelle le côté libre d'émission et réception (24a) de la tête de mesure (24) est amené en recouvrement, lorsque le corps formant insert (20-23) est dans la position de mesure, de sorte que le liquide de couplage situé dans la chambre de mesure (7) parvient jusque sur le côté dégagé d'émission et de réception (24a), et qui est fermé par le corps formant insert (20-23) une fois que le corps formant insert (20-23) a été amené dans une position de montage.

2. Dispositif selon la revendication 1, caractérisé en ce que le logement (16, 17) est réalisé sous la forme d'un trou borgne et que le corps formant insert (20-23) peut être déplacé par rotation à la manière d'un barillet de revolver, dans la position de mesure et de montage.

3. Dispositif selon la revendication 1 ou 2, caractérisé en ce que la chambre de mesure (7) remplie d'eau est disposée entre une chambre de refroidissement à dépression (4) comportant une douille de calibrage (5) et une chambre de refroidissement à dépression (8) et se raccorde directement à ces chambres (4, 8), la chambre de mesure (7) possédant un trop-plein (15) qui débouche dans l'une des chambres de refroidissement (4).
